(19) Europäisches Patentamt
European Patent Office
Office européen des brevets

(11) **EP 4 661 355 A1**

(12) **EUROPEAN PATENT APPLICATION**
published in accordance with Art. 153(4) EPC

(43) Date of publication:
**10.12.2025 Bulletin 2025/50**

(21) Application number: **24752874.8**

(22) Date of filing: **06.02.2024**

(51) International Patent Classification (IPC):
**H04L 41/0803** (2022.01)

(52) Cooperative Patent Classification (CPC):
**H04L 12/46; H04L 41/0803; H04L 41/0894;**
**H04L 41/0895; H04L 41/40; H04L 41/5051;**
**H04L 41/5054**

(86) International application number:
**PCT/CN2024/076311**

(87) International publication number:
**WO 2024/165019 (15.08.2024 Gazette 2024/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.02.2023 CN 202310100838**
**30.03.2023 CN 202310331901**

(71) Applicant: **Huawei Cloud Computing**
**Technologies Co., Ltd.**
**Guiyang, Guizhou 550025 (CN)**

(72) Inventors:
• **CHEN, Lei**
**Guiyang, Guizhou 550025 (CN)**
• **HUANG, Denghui**
**Guiyang, Guizhou 550025 (CN)**
• **LIN, Kai**
**Guiyang, Guizhou 550025 (CN)**
• **XU, Zihe**
**Guiyang, Guizhou 550025 (CN)**

(74) Representative: **Körber, Martin Hans**
**Mitscherlich PartmbB**
**Patent- und Rechtsanwälte**
**Karlstraße 7**
**80333 München (DE)**

(54) **NETWORK CONTROL METHOD BASED ON CLOUD MANAGEMENT PLATFORM, AND CLOUD MANAGEMENT PLATFORM**

(57) This application discloses a network control method based on a cloud management platform and a cloud management platform, to not only meet a network requirement of each tenant in an entire network, but also ensure network quality of each tenant. The method in this application includes: A cloud management platform provides a configuration interface, where the configuration interface is configured to obtain an elastic transport layer ETP configuration parameter input by a tenant. The cloud management platform creates, based on the ETP configuration parameter, a first ETP bound to a first cloud instance of the tenant, where the first ETP is configured to forward data from the first cloud instance to the cloud management platform. The cloud management platform performs network control on the data based on the ETP configuration parameter, and sends, based on a network control result, the data to a second ETP bound to a second cloud instance, where the second ETP is configured to forward the data from the cloud management platform to the second cloud instance.

A cloud management platform provides a configuration interface, where the configuration interface is configured to obtain an ETP configuration parameter input by a tenant — 401

The cloud management platform creates, based on the ETP configuration parameter, a first ETP bound to a first cloud instance of the tenant, where the first ETP is configured to forward data from the first cloud instance to the cloud management platform — 402

The cloud management platform performs network control on the data based on the ETP configuration parameter, and sends, based on a network control result, the data to a second ETP bound to a second cloud instance, where the second ETP is configured to forward the data from the cloud management platform to the second cloud instance — 403

FIG. 4

**Description**

This application claims priorities to Chinese Patent Application No. 202310100838.7, filed with the China National Intellectual Property Administration on February 9, 2023 and entitled "NETWORK CONTROL METHOD BASED ON CLOUD MANAGEMENT PLATFORM AND RELATED DEVICE THEREOF", and to Chinese Patent Application No. 202310331901.8, filed with the China National Intellectual Property Administration on March 30, 2023 and entitled "NETWORK CONTROL METHOD BASED ON CLOUD MANAGEMENT PLATFORM AND CLOUD MANAGEMENT PLATFORM", both of which are incorporated herein by reference in their entireties.

**TECHNICAL FIELD**

Embodiments of this application relate to the field of cloud technologies, and in particular, to a network control method based on a cloud management platform and a cloud management platform.

**BACKGROUND**

With rapid development of cloud technologies, increasingly more tenants choose to use a cloud service provided by a cloud service system to complete data processing, for example, a cloud storage service, a cloud computing service, a cloud query service, or a cloud security service.

Currently, the cloud service system may include a cloud management platform and a cloud instance of a tenant. When a cloud instance of a tenant needs to send data to a cloud instance of another tenant, once various statuses occur in a network in which the cloud instance is located, the cloud instance of the tenant may run a network control algorithm pre-embedded by the tenant to implement network control on the data, to successfully send the data to the cloud management platform. Then, the cloud management platform sends the data to the cloud instance of the another tenant for processing.

In the foregoing cloud service system, the network control algorithm is run and operated by the tenant on the cloud instance of the tenant. In other words, a network control authority resides with the cloud instance of the tenant instead of the cloud management platform. Once the tenant forcibly sends the data regardless of various statuses in the network when performing network control, network quality of another tenant is to be greatly degraded.

**SUMMARY**

Embodiments of this application provide a network control method based on a cloud management platform and a cloud management platform, to not only meet a network requirement of each tenant in an entire network, but also ensure network quality of each tenant.

A first aspect of embodiments of this application provides a network control method based on a cloud management platform. The method includes:

When a tenant needs to configure a first elastic transport layer (elastic transport, ETP) for a first cloud instance of the tenant, the cloud management platform may provide a configuration interface for the tenant. Therefore, the tenant can input an ETP configuration parameter of the tenant to the configuration interface. In this way, the cloud management platform can receive, through the configuration interface, the ETP configuration parameter sent by the tenant.

After receiving the ETP configuration parameter from the tenant, the cloud management platform may create, based on the ETP configuration parameter, the first ETP bound to the first cloud instance of the tenant. In this way, the first cloud instance of the tenant can access the cloud management platform through the first ETP bound to the first cloud instance. When the tenant needs to enable the first cloud instance to send data to a second cloud instance, the first cloud instance may first send the data to the first ETP, so that the first ETP can forward the data to the cloud management platform.

After receiving the data from the first cloud instance, the cloud management platform may perform network control on the data based on the ETP configuration parameter from the tenant, to obtain a network control result. Then, the cloud management platform may send, based on the network control result, the data to a second ETP bound to the second cloud instance, so that the second ETP forwards the data to the second cloud instance.

It can be learned from the foregoing method that, when the tenant needs to configure the first ETP for the first cloud instance of the tenant, the cloud management platform may provide the configuration interface for the tenant, to obtain, through the configuration interface, the ETP configuration parameter input by the tenant. Then, the cloud management platform may create, based on the ETP configuration parameter, the first ETP bound to the first cloud instance of the tenant. When the tenant needs to enable the first cloud instance to send the data to the second cloud instance, the first cloud instance may send the data to the cloud management platform through the first ETP. Then, the cloud management platform may perform network control on the data based on the ETP configuration parameter, and send the data to the second cloud instance based on the network control result through the second ETP bound to the second cloud instance. In the foregoing process, after the cloud management platform configures the dedicated first ETP for the first cloud instance of the tenant based on the ETP configuration parameter of the tenant, a network control authority may be successfully transferred from the first cloud instance to the cloud management platform. When performing network control, the cloud management platform may comprehensively consider various statuses in an entire network. Therefore, a result obtained by the cloud management platform through network control not only can ensure that the data of the first cloud instance is successfully sent to the second cloud instance, to meet a data transport requirement of the tenant, but also can avoid the various statuses in the entire network or mitigate impact caused by these emergent statuses, to ensure network quality of another tenant.

In a possible implementation, the first cloud instance, the first ETP, the second cloud instance, and the second ETP are located in a first transport-based virtual private cloud (transport-based virtual private cloud, TVPC). In the foregoing implementation, the first cloud instance is one of a plurality of cloud instances in the first TVPC, and the second cloud instance is another cloud instance in the plurality of cloud instances in the first TVPC. The first ETP is one of a plurality of ETPs in the first TVPC, and the second ETP is another ETP in the plurality of ETPs in the first TVPC.

In a possible implementation, the first cloud instance and the first ETP are located in a first TVPC, and the second cloud instance and the second ETP are located in a second TVPC. In the foregoing implementation, the first cloud instance is one of a plurality of cloud instances in the first TVPC, and the second cloud instance is one of a plurality of cloud instances in the second TVPC. The first ETP is one of a plurality of ETPs in the first TVPC, and the second ETP is one of a plurality of ETPs in the second TVPC.

In a possible implementation, the ETP configuration parameter includes a communication latency between the plurality of ETPs in the first TVPC, a total throughput of the plurality of ETPs in the first TVPC, a throughput of the first ETP, and a data transport policy of the first ETP, and the plurality of ETPs in the first TVPC include the first ETP and the second ETP. That the cloud management platform performs network control on the data based on the ETP configuration parameter includes: The cloud management platform performs network control on the data based on the communication latency, the total throughput, the throughput, and the data transport policy, to obtain a network control result. In the foregoing implementation, when the first cloud instance and the second cloud instance are located in the first TVPC, the cloud management platform may perform network control on the data based on the configuration parameter for the first ETP (including the throughput of the first ETP and the data transport policy of the first ETP) and the configuration parameter for the first TVPC (including the communication latency between the plurality of ETPs in the first TVPC and the total throughput of the plurality of ETPs in the first TVPC), to obtain the network control result.

In a possible implementation, the ETP configuration parameter further includes a communication latency between the plurality of ETPs in the first TVPC and the plurality of ETPs in the second TVPC, a total throughput of the plurality of ETPs in the first TVPC and the plurality of ETPs in the second TVPC, a throughput of the first ETP, and a data transport policy of the first ETP, the plurality of ETPs in the first TVPC include the first ETP, and the plurality of ETPs in the second TVPC include the second ETP. That the cloud management platform performs network control on the data based on the ETP configuration parameter includes: The cloud management platform performs network control on the data based on the communication latency, the total throughput, the throughput, and the data transport policy, to obtain a network control result. In the foregoing implementation, when the first cloud instance is located in the first TVPC and the second cloud instance is located in the second TVPC, the cloud management platform may perform network control on the data based on the configuration parameter for the first ETP (including the throughput of the first ETP and the data transport policy of the first ETP) and the configuration parameter for the first TVPC and the second TVPC (including the communication latency between the plurality of ETPs in the first TVPC and the plurality of ETPs in the second TVPC, and the total throughput of the plurality of ETPs in the first TVPC and the plurality of ETPs in the second TVPC), to obtain the network control result.

In a possible implementation, the ETP configuration parameter includes a physical distance between the plurality of ETPs in the first TVPC. That the cloud management platform creates, based on the ETP configuration parameter, the first ETP bound to the first cloud instance of the tenant includes: The cloud management platform creates, in the first TVPC based on the physical distance, the first ETP bound to the first cloud instance of the tenant. In the foregoing implementation, because the first cloud instance of the tenant is located in the first TVPC, the cloud management platform may extract the physical distance between the plurality of ETPs in the first TVPC from the configuration parameter for the first TVPC. Then, because the physical distance specifies a physical distance between the first ETP and a remaining ETP in the first TVPC, the cloud management platform may select, from the first TVPC, a location for deploying the first ETP, and create, at the location, the first ETP bound to the first cloud instance.

In a possible implementation, the network control includes transport control, congestion control, rate control, and path control, and the network control result includes a transport control result, a congestion control result, a rate control result, and a path control result. In the foregoing implementation, when both the first cloud instance and the second cloud instance are located in the first TVPC, the cloud management platform may perform transport control on the data based on the data transport policy of the first ETP, to obtain a transport control result. The cloud management platform may further perform congestion control on the data based on the communication latency between the plurality of ETPs in the first TVPC, to obtain a congestion control result. The cloud management platform may further perform rate control on the data based on the total throughput of the plurality of ETPs in the first TVPC, to obtain a rate control result. The cloud management platform may further perform path control on the data based on the throughput of the first ETP and the total throughput of the plurality of ETPs in the first TVPC, to obtain a path control result. When the first cloud instance is located in the first TVPC and the second cloud instance is located in the second TVPC, the cloud management platform may perform transport control on the data based on the data transport policy of the first ETP, to obtain a transport control result. The cloud management platform may further perform congestion control on the data based on the communication latency between the plurality of ETPs in the first TVPC and the plurality of ETPs in the second TVPC, to obtain a congestion control result. The cloud management platform may further perform rate control on the data based on the total throughput of the plurality of ETPs in the first TVPC and the plurality of ETPs in the second TVPC, to obtain a rate control result. The cloud management platform may further perform path control on the data based on the throughput of the first ETP and the total throughput of the plurality of ETPs in the first TVPC and the plurality of ETPs in the second TVPC, to obtain a path control result.

A second aspect of embodiments of this application provides a cloud management platform. The cloud management platform includes: a providing module, configured to provide a configuration interface, where the configuration interface is configured to obtain an ETP configuration parameter input by a tenant; a creation module, configured to create, based on the ETP configuration parameter, a first ETP bound to a first cloud instance of the tenant, where the first ETP is configured to forward data from the first cloud instance to the cloud management platform; and a control module, configured to: perform network control on the data based on the ETP configuration parameter, and send, based on a network control result, the data to a second ETP bound to a second cloud instance, where the second ETP is configured to forward the data from the cloud management platform to the second cloud instance.

It can be learned from the foregoing cloud management platform that, when the tenant needs to configure the first ETP for the first cloud instance of the tenant, the cloud management platform may provide the configuration interface for the tenant, to obtain, through the configuration interface, the ETP configuration parameter input by the tenant. Then, the cloud management platform may create, based on the ETP configuration parameter, the first ETP bound to the first cloud instance of the tenant. When the tenant needs to enable the first cloud instance to send the data to the second cloud instance, the first cloud instance may send the data to the cloud management platform through the first ETP. Then, the cloud management platform may perform network control on the data based on the ETP configuration parameter, and send the data to the second cloud instance based on the network control result through the second ETP bound to the second cloud instance. In the foregoing process, after the cloud management platform configures the dedicated first ETP for the first cloud instance of the tenant based on the ETP configuration parameter of the tenant, a network control authority may be successfully transferred from the first cloud instance to the cloud management platform. When performing network control, the cloud management platform may comprehensively consider various statuses in an entire network. Therefore, a result obtained by the cloud management platform through network control not only can ensure that the data of the first cloud instance is successfully sent to the second cloud instance, to meet a data transport requirement of the tenant, but also can avoid the various statuses in the entire network or mitigate impact caused by these emergent statuses, to ensure network quality of another tenant.

In a possible implementation, the first cloud instance, the first ETP, the second cloud instance, and the second ETP are located in a first TVPC.

In a possible implementation, the first cloud instance and the first ETP are located in a first TVPC, and the second cloud instance and the second ETP are located in a second TVPC.

In a possible implementation, the ETP configuration parameter includes a communication latency between a plurality of ETPs in the first TVPC, a total throughput of the plurality of ETPs in the first TVPC, a throughput of the first ETP, and a data transport policy of the first ETP, and the plurality of ETPs in the first TVPC include the first ETP and the second ETP. The control module is configured to perform network control on the data based on the communication latency, the total throughput, the throughput, and the data transport policy, to obtain a network control result.

In a possible implementation, the ETP configuration parameter further includes a communication latency between a plurality of ETPs in the first TVPC and a plurality of ETPs in the second TVPC, a total throughput of the plurality of ETPs in the first TVPC and the plurality of ETPs in the second TVPC, a throughput of the first ETP, and a data transport policy of the first ETP, the plurality of ETPs in the first TVPC include the first ETP, and the plurality of ETPs in the second TVPC include the second ETP. The control module is configured to perform network control on the data based on the communication latency, the total throughput, the throughput, and the data transport policy, to obtain a network control result.

In a possible implementation, the ETP configuration parameter includes a physical distance between the plurality of ETPs in the first TVPC. The creation module is configured to create, in the first TVPC based on the physical distance, the first ETP bound to the first cloud instance of the tenant.

In a possible implementation, the network control includes transport control, congestion control, rate control, and path control, and the network control result includes a transport control result, a congestion control result, a rate control result, and a path control result.

A third aspect of embodiments of this application provides a cloud management platform. The cloud management platform includes a memory and a processor, the memory stores code, the processor is configured to execute the code, and when the code is executed, the cloud management platform performs the method according to any one of the first aspect or the possible implementations of the first aspect.

A fourth aspect of embodiments of this application provides a computer storage medium. The computer storage medium stores one or more instructions. When the instructions are executed by one or more computers, the one or more computers are enabled to perform the method according to any one of the first aspect or the possible implementations of the first aspect.

A fifth aspect of embodiments of this application provides a computer program product. The computer program product stores instructions, and when the instructions are executed by a computer, the computer is enabled to perform the method according to any one of the first aspect or the possible implementations of the first aspect.

In embodiments of this application, when the tenant needs to configure the first ETP for the first cloud instance of the tenant, the cloud management platform may provide the configuration interface for the tenant, to obtain, through the configuration interface, the ETP configuration parameter input by the tenant. Then, the cloud management platform may create, based on the ETP configuration parameter, the first ETP bound to the first cloud instance of the tenant. When the tenant needs to enable the first cloud instance to send the data to the second cloud instance, the first cloud instance may send the data to the cloud management platform through the first ETP. Then, the cloud management platform may perform network control on the data based on the ETP configuration parameter, and send the data to the second cloud instance based on the network control result through the second ETP bound to the second cloud instance. In the foregoing process, after the cloud management platform configures the dedicated first ETP for the first cloud instance of the tenant based on the ETP configuration parameter of the tenant, a network control authority may be successfully transferred from the first cloud instance to the cloud management platform. When performing network control, the cloud management platform may comprehensively consider various statuses in an entire network. Therefore, a result obtained by the cloud management platform through network control not only can ensure that the data of the first cloud instance is successfully sent to the second cloud instance, to meet a data transport requirement of the tenant, but also can avoid the various statuses in the entire network or mitigate impact caused by these emergent statuses, to ensure network quality of another tenant.

## BRIEF DESCRIPTION OF DRAWINGS

FIG. 1 is a diagram of a structure of a cloud service system according to an embodiment of this application;
FIG. 2 is a diagram of another structure of a cloud service system according to an embodiment of this application;
FIG. 3 is a diagram of a network protocol stack according to an embodiment of this application;
FIG. 4 is a schematic flowchart of a network control method based on a cloud management platform according to an embodiment of this application;
FIG. 5 is a diagram of data transport according to an embodiment of this application;
FIG. 6 is another diagram of data transport according to an embodiment of this application;
FIG. 7 is a diagram of a structure of a cloud management platform according to an embodiment of this application; and
FIG. 8 is a diagram of another structure of a cloud management platform according to an embodiment of this application.

## DESCRIPTION OF EMBODIMENTS

Embodiments of this application provide a network control method based on a cloud management platform and a cloud management platform, to not only meet a network requirement of each tenant in an entire network, but also ensure network quality of each tenant.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

With rapid development of cloud technologies, more tenants choose to use a cloud service provided by a cloud service system to complete data processing, for example, a cloud storage service, a cloud computing service, a cloud query service, or a cloud security service.

Currently, the cloud service system may include a cloud management platform and a cloud instance of a tenant. When a cloud instance of a tenant needs to send data to a cloud instance of another tenant, once network resources (for example, a switch and a gateway) between the cloud instances are congested, the cloud instance of the tenant may run a congestion control algorithm pre-embedded by the tenant to implement congestion control on the data, to successfully send the data to the cloud management platform. Then, the cloud management platform sends the data to the cloud instance of the another tenant for processing.

In the foregoing cloud service system, the congestion control algorithm (for example, a user datagram protocol (user datagram protocol, UDP)) is selected by the tenant, and is run and operated by the tenant on the cloud instance of the tenant. In other words, a congestion control authority resides with the cloud instance of the tenant instead of the cloud management platform. Once the tenant forcibly sends the data regardless of various congestion statuses in the network when performing congestion control, network quality of another tenant is to be greatly degraded.

Further, in the foregoing cloud service system, various information such as a physical latency (distance), a static communication latency, and a dynamic communication latency of some network resources cannot be reflected and ensured for the tenant and another tenant. As a result, no tenant can accurately learn of a congestion status in an entire network, and a deterministic network requirement of the tenant cannot be met.

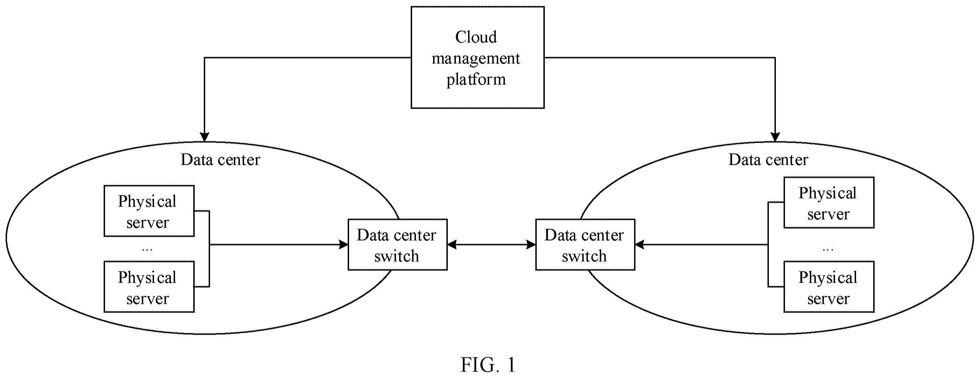

To resolve the foregoing problem, embodiments of this application provide a network control method based on a cloud management platform. The method may be applied to a cloud service system shown in FIG. 1 (FIG. 1 is a diagram of a structure of the cloud service system according to an embodiment of this application). The cloud service system includes a cloud management platform and a plurality of data centers. The cloud management platform may perform overall management on the plurality of data centers. The plurality of data centers may communicate with each other through a cloud backbone network and/or the internet (internet). Each data center includes physical devices such as a plurality of physical servers and a plurality of data center switches.

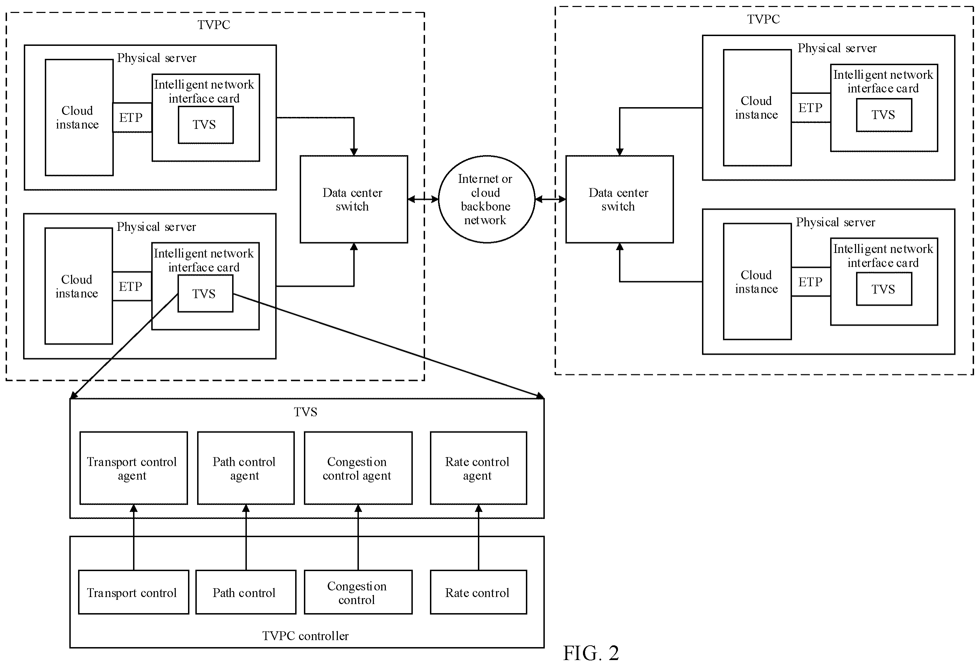

As shown in FIG. 2 (FIG. 2 is a diagram of another structure of a cloud service system according to an embodiment of this application), in the cloud service system, after a data center is started and accesses a cloud backbone network (or the internet), the data center may be abstracted as a data center network, which may also be referred to as a transport-based virtual private cloud or a transport-based virtual private network (transport-based virtual private cloud, TVPC). It can be learned that the cloud service system may include a plurality of TVPCs, and communication between the plurality of TVPCs and communication inside any TVPC are controlled by a cloud management platform.

For a physical server in the TVPC, under control of the cloud management platform, the physical server may deploy one or more cloud instances (for example, a virtual machine (virtual machine, VM) or a docker (docker)) on the physical server by using a virtualisation technology. Alternatively, the physical server may be directly used as a cloud instance in a form of a bare metal server (bare metal server, BMS), and may be allocated by the cloud management platform to a tenant for use, to provide the tenant with various cloud services, for example, a cloud storage service, a cloud computing service, a cloud query service, and a cloud security service. It can be learned that each TVPC in the cloud service system may include a plurality of cloud instances, and communication between cloud instances in a same TVPC or communication between cloud instances in different TVPCs is controlled by the cloud management platform.

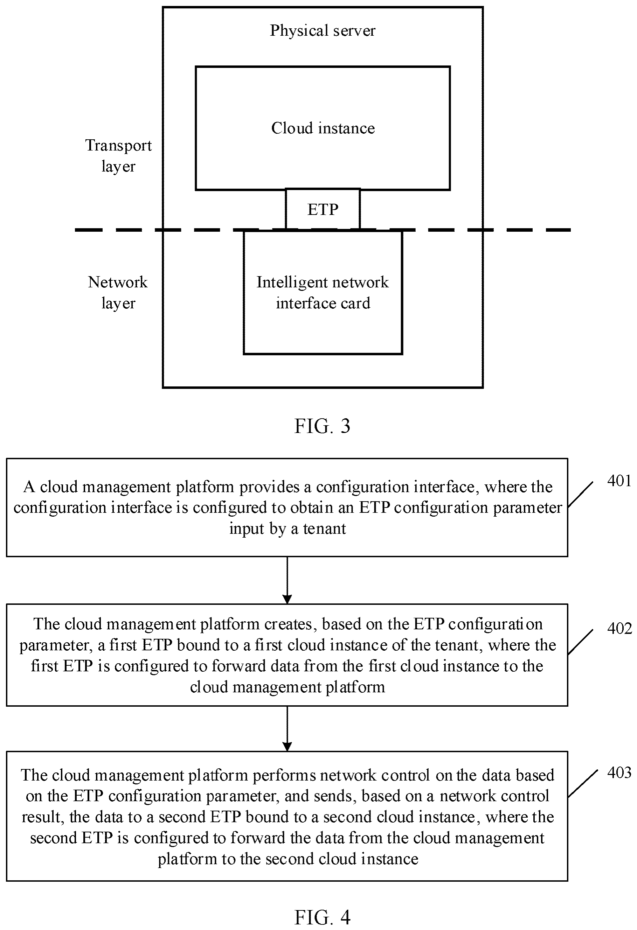

For a cloud instance in the TVPC, the cloud management platform may configure a dedicated elastic transport layer (elastic transport, ETP) and an intelligent network interface card for the cloud instance. The cloud instance, the ETP configured for the cloud instance, and the intelligent network interface card configured for the cloud instance may be deployed on a same physical server, or certainly, may be separately deployed on different physical servers. It should be noted that, as shown in FIG. 3 (FIG. 3 is a diagram of a network protocol stack according to an embodiment of this application), from a perspective of the network protocol stack, the cloud instance is located at a transport layer, the intelligent network interface card is located at a network layer, and the cloud instance accesses the intelligent network interface card through the ETP. An application installed on the cloud instance may invoke the ETP to provide the ETP with information such as to-be-operated data, a source (that is, a cloud instance that sends the data), a destination (that is, a cloud instance that receives the data), and various input/output (input/output, I/O) operations on the data (these I/O operations are usually presented by using transport layer semantics defined in an operating system of the cloud instance, for example, send, receive, read, write, load, and store). The ETP sends the information to the intelligent network interface card. The intelligent network interface card performs transport layer decapsulation and encapsulation on the information, performs network control, and sends the information to the destination based on a network control result.

For the cloud management platform, the cloud management platform may further provide various interfaces for a tenant, to receive various requests of the tenant and perform corresponding operations. For example, the cloud management platform may provide a login interface, to receive login information (for example, an account and a password of the tenant) of the tenant through the login interface, and allow the tenant to log in to the cloud management platform after the login information is verified. For another example, the cloud management platform may further provide a configuration interface, to receive an ETP configuration parameter of the tenant through the configuration interface, configure a corresponding ETP for a cloud instance of the tenant based on the ETP configuration parameter, and subsequently implement, by using the ETP configuration parameter, network control required by the tenant, and the like.

It should be noted that the cloud management platform may include two parts. One part is the intelligent network interface card close to the cloud instance, and the other part is a TVPC controller (TVPC controller) away from the cloud instance. The intelligent network interface card and the TVPC controller are usually isolated physically, that is, are separately deployed on different physical servers. In addition, the intelligent network interface card and the TVPC controller may cooperate to implement network control in a data transport process. A transport virtual switch (transport virtual switch, TVS) is set in the intelligent network interface card. The transport virtual switch includes four functional modules: a transport control agent (transport control agent) module, a congestion control agent (congestion control agent) module, a path control agent (path control agent) module, and a rate control agent (rate control agent) module. The TVPC controller includes four functional modules: a transport control (transport control) module, a congestion control (congestion control) module, a path control (path control) module, and a rate control (rate control) module. When the cloud instance needs to transmit data to another cloud instance, the transport control module in the TVPC controller may cooperate with the transport control agent module in the transport virtual switch to implement transport control, the congestion control module in the TVPC controller may cooperate with the congestion control agent module in the transport virtual switch to implement congestion control, the rate control module in the TVPC controller may cooperate with the rate control agent module in the transport virtual switch to implement rate control, and the path control module in the TVPC controller may cooperate with the path control agent module in the transport virtual switch to implement path control.

To further understand a working process of the cloud management platform, the following further describes the working process with reference to FIG. 4. FIG. 4 is a schematic flowchart of a network control method based on a cloud management platform according to an embodiment of this application. As shown in FIG. 4, the method includes the following steps.

401: The cloud management platform provides a configuration interface, where the configuration interface is configured to obtain an ETP configuration parameter input by a tenant.

In this embodiment, when the tenant needs to configure a first ETP for a first cloud instance of the tenant, a TVPC controller of the cloud management platform may provide a configuration interface (for example, an ETP configuration input bar in a tenant interface) for a client of the tenant (for example, a browser used by the tenant). The tenant may input the ETP configuration parameter to the configuration interface through the client used by the tenant. Therefore, the TVPC controller can receive, through the configuration interface, the ETP configuration parameter sent by the tenant through the client.

Specifically, it is assumed that the tenant selects a first TVPC (the first cloud instance of the tenant is located in the first TVPC) and a second TVPC based on a data processing requirement of the tenant. In other words, the tenant may complete data processing in the first TVPC, or may complete data processing between the first TVPC and the second TVPC. In this case, the ETP configuration parameter input by the tenant may include three parts. A first part of the configuration parameter is a configuration parameter for the first ETP, a second part of the configuration parameter is a configuration parameter for the first TVPC, and a third part of the configuration parameter is a configuration parameter for the first TVPC and the second TVPC. The following describes the three parts of the configuration parameter.

(1) The configuration parameter for the first ETP may include a throughput of the first ETP and a data transport policy of the first ETP. The throughput of the first ETP may include a physical rate (physical_rate) of the first ETP, a committed rate (committed_rate) of the first ETP, a maximum rate (max_rate) of the first ETP, and the like. The data transport policy of the first ETP may include a reliable transport (transport_reliable) policy of the first ETP, an ordering transport (transport_order) policy of the first ETP, and the like. Specific descriptions of the configuration parameter for the first ETP are shown in Table 1.

Table 1

| Name of a configuration parameter | Type of a configuration parameter | Content of a configuration parameter |
|---|---|---|
| transport_reliable | string | Reliable transport policy of the first ETP, where when a value of the policy is reliable, it indicates that reliable transport is required, and when a value of the policy is unreliable, it indicates that reliable transport is not required |
| transport_order | string | Ordering transport policy of the first ETP, where when a value of the policy is no order, it indicates that ordering is not required, when a value of the policy is strong order, it indicates that strict ordering is required, and when a value of the policy is relaxed order, it indicates relaxed ordering |
| physical_rate | integer | It may also be referred to as a rate of a physical network interface card of a physical server on which the first ETP is located, and defines a minimum inter-frame gap when the first ETP sends a packet |

(continued)

| Name of a configuration parameter | Type of a configuration parameter | Content of a configuration parameter |
|---|---|---|
| committed rate | integer | It may also be referred to as a minimum throughput of the first ETP, and defines a minimum bandwidth (BPS&PPS) for the first ETP to receive and send a packet |
| max_rate | integer | It may also be referred to as a maximum throughput of the first ETP, and defines a maximum bandwidth (BPS&PPS) for the first ETP to receive and send a packet |

(2) The configuration parameter for the first TVPC may include a physical distance (which may also be referred to as a physical latency (physical_latency)) between a plurality of ETPs in the first TVPC, a communication latency between the plurality of ETPs in the first TVPC, and a total throughput of the plurality of ETPs in the first TVPC. The communication latency between the plurality of ETPs in the first TVPC may include an average latency (average_latency) between any two ETPs in the first TVPC, a maximum latency (max_latency) between any two ETPs in the first TVPC, and the like. The total throughput of the plurality of ETPs in the first TVPC may include a minimum total rate (total_committed_rate) of the plurality of ETPs in the first TVPC, a maximum total rate (total_max_rate) of the plurality of ETPs in the first TVPC, and the like. Specific descriptions of the configuration parameter for the first TVPC are shown in Table 2.

Table 2

| Name of a configuration parameter | Type of a configuration parameter | Content of a configuration parameter |
|---|---|---|
| physical_latency | integer | It may also be referred to as a maximum physical latency (physical distance) between all the ETPs in the first TVPC, and is used to ensure that a physical distance between all the ETPs in the first TVPC does not exceed the value |
| average_latency | integer | It may also be referred to as an average latency of communication between any two ETPs in the first TVPC, and the average latency refers to latencies in different dimensions (P95&P99&P99.9&P99.99) |
| max_latency | integer | It may also be referred to as a maximum latency of communication between any two ETPs in the first TVPC, and the maximum latency refers to latencies in different dimensions (P95&P99&P99.9&P99.99) |
| total_committed rate | integer | It may also be referred to as a minimum total throughput of all the ETPs in the first TVPC, that is, a committed value (minimum value) of a sum of throughputs of all the ETPs in the first TVPC |
| total_max_rate | integer | It may also be referred to as a maximum total throughput of all the ETPs in the first TVPC, that is, a maximum value of a sum of throughputs of all the ETPs in the first TVPC |

(3) The configuration parameter for the first TVPC and the second TVPC may include a communication latency between the plurality of ETPs in the first TVPC and the plurality of ETPs in the second TVPC, and a total throughput of the plurality of ETPs in the first TVPC and the plurality of ETPs in the second TVPC. The communication latency between the plurality of ETPs in the first TVPC and the plurality of ETPs in the second TVPC may include an average latency (average_latency) between any ETP in the first TVPC and any ETP in the second TVPC, a maximum latency (max_latency) between any ETP in the first TVPC and any ETP in the second TVPC, and the like. The total throughput of the plurality of ETPs in the first TVPC and the plurality of ETPs in the second TVPC may include a minimum total rate (total_committed_rate) of the plurality of ETPs in the first TVPC and the plurality of ETPs in the second TVPC, a maximum total rate (total_max_rate) of the plurality of ETPs in the first TVPC and the plurality of ETPs in the second TVPC, and the like. Specific descriptions of the configuration parameter for the first TVPC and the second TVPC are shown in Table 3.

Table 3

| Name of a configuration parameter | Type of a configuration parameter | Content of a configuration parameter |
|---|---|---|
| average_latency | integer | It may also be referred to as an average latency of communication between any ETP in the first TVPC and any ETP in the second TVPC, and the average latency refers to latencies in different dimensions (P95&P99&P99.9&P99.99) |

| Name of a configuration parameter | Type of a configuration parameter | Content of a configuration parameter |
|---|---|---|
| max_latency | integer | It may also be referred to as a maximum latency of communication between any ETP in the first TVPC and any ETP in the second TVPC, and the maximum latency refers to latencies in different dimensions (P95&P99&P99.9&P99.99) |
| total_ committed rate | integer | It may also be referred to as a minimum total throughput of all the ETPs in the first TVPC and the second TVPC, that is, a committed value (minimum value) of a sum of throughputs of all the ETPs in the first TVPC and the second TVPC |
| total_max_rate | integer | It may also be referred to as a maximum total throughput of all the ETPs in the first TVPC and the second TVPC, that is, a maximum value of a sum of throughputs of all the ETPs in the first TVPC and the second TVPC |

402: The cloud management platform creates, based on the ETP configuration parameter, the first ETP bound to the first cloud instance of the tenant, where the first ETP is configured to forward data from the first cloud instance to the cloud management platform.

After receiving the ETP configuration parameter from the tenant, the TVPC controller may create, based on the ETP configuration parameter, the first ETP bound to the first cloud instance of the tenant and a first intelligent network interface card bound to the first cloud instance. In this way, the first cloud instance can access the first intelligent network interface card through the first ETP. Because the first intelligent network interface card may be considered as a part of the cloud management platform, it is equivalent to the first cloud instance being able to access the cloud management platform through the first ETP. Details are not described subsequently.

In this case, when the tenant needs to enable the first cloud instance to send data to a second cloud instance, the first cloud instance may first send the data to the first ETP, so that the first ETP can forward the data to the first intelligent network interface card.

Specifically, the TVPC controller may create, in the following manner, the first ETP bound to the first cloud instance:

Because the first cloud instance of the tenant is located in the first TVPC, the TVPC controller may extract the physical distance between the plurality of ETPs in the first TVPC from the configuration parameter for the first TVPC. Then, because the physical distance specifies a physical distance between the first ETP and a remaining ETP in the first TVPC (which may also be understood as a physical distance between a physical server in which the first ETP is located and a physical server in which the remaining ETP is located), the TVPC controller may select, from the first TVPC, a physical server for deploying the first ETP, and create, on the physical server, the first ETP bound to the first cloud instance and the first intelligent network interface card bound to the first cloud instance.

More specifically, the TVPC controller may further configure, for the second cloud instance, a second ETP bound to the second cloud instance and a second intelligent network interface card bound to the second cloud instance. Therefore, there are the following plurality of relationships between the first cloud instance and the second cloud instance:

(1) The first cloud instance, the first ETP, the second cloud instance, and the second ETP are all located in the first TVPC. In other words, the first cloud instance is one of a plurality of cloud instances in the first TVPC, the second cloud instance is another cloud instance in the plurality of cloud instances in the first TVPC, the first ETP is one of the plurality of ETPs in the first TVPC, and the second ETP is another ETP in the plurality of ETPs in the first TVPC. Either of the first intelligent network interface card and the second intelligent network interface card may be considered as a part that is of the cloud management platform and that is deployed in the first TVPC, and the TVPC controller may be considered as a part that is of the cloud management platform and that is deployed outside all TVPCs.

(2) The first cloud instance and the first ETP are located in the first TVPC, and the second cloud instance and the second ETP are located in the second TVPC. In other words, the first cloud instance is one of a plurality of cloud instances in the first TVPC, the second cloud instance is one of a plurality of cloud instances in the second TVPC, the first ETP is one of the plurality of ETPs in the first TVPC, and the second ETP is one of the plurality of ETPs in the second TVPC. The first intelligent network interface card may be considered as a part that is of the cloud management platform and that is deployed in the first TVPC, the second intelligent network interface card may be considered as a part that is of the cloud management platform and that is deployed in the second TVPC, and the TVPC controller may be considered as a part that is of the cloud management platform and that is deployed outside all TVPCs.

403: The cloud management platform performs network control on the data based on the ETP configuration parameter, and sends, based on a network control result, the data to the second ETP bound to the second cloud instance, where the second ETP is configured to forward the data from the cloud management platform to the second cloud instance.

After receiving the data from the first cloud instance, the first intelligent network interface card may notify the TVPC controller. Therefore, the TVPC controller may control, based on the ETP configuration parameter from the tenant, the first intelligent network interface card to perform network control on the data, to obtain the network control result. Then, the first intelligent network interface card may send, based on the network control result, the data to the second ETP bound to the second cloud instance, so that the second ETP forwards the data to the second cloud instance.

Specifically, the TVPC controller and the first intelligent network interface card may implement network control in the following plurality of manners:

(1) When the first cloud instance and the second cloud instance are located in the first TVPC, the TVPC controller may control, based on the configuration parameter for the first ETP and the configuration parameter for the first TVPC, the first intelligent network interface card to perform network control on the data, to obtain a network control result. This process includes the following steps.

(1.1) The TVPC controller may send the reliable transport policy of the first ETP and the ordering transport policy of the first ETP to the first intelligent network interface card, so that the first intelligent network interface card performs transport control on the data according to these policies, to obtain a transport control result. For example, the reliable transport policy of the first ETP is performing reliable transport when the data is lost (that is, retransmission is performed when the data is lost), and the ordering transport policy of the first ETP is performing strict ordering transport when the data is disordered. In this case, when the data is lost or the data is disordered, the first intelligent network interface card may correspondingly perform reliable transport or strict ordering transport on the data (specific values of the two policies may be considered as the transport control result).

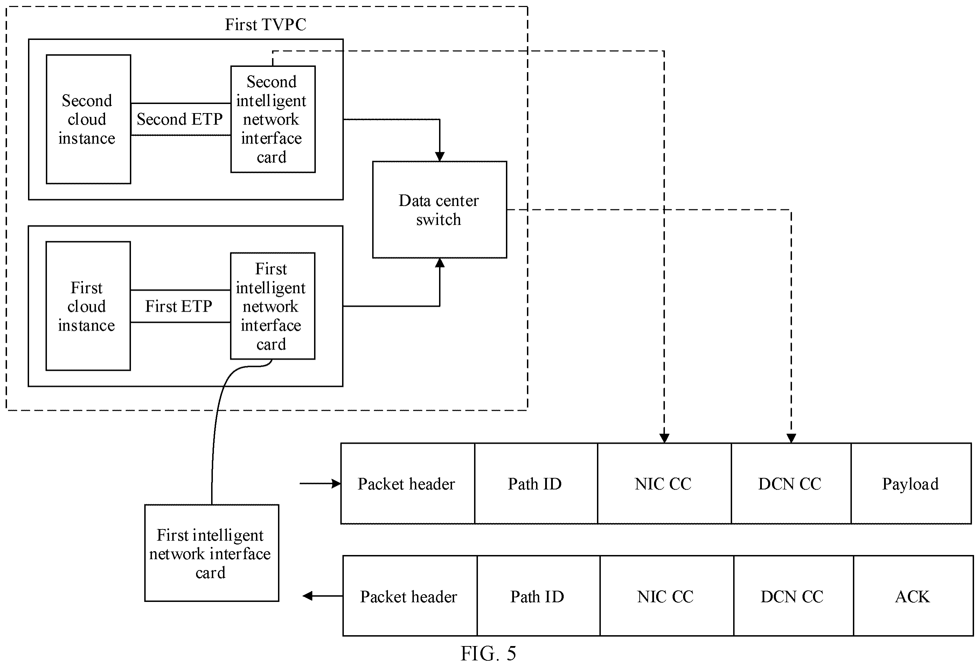

(1.2) The TVPC controller may send the average latency between any two ETPs in the first TVPC and the maximum latency between any two ETPs in the first TVPC to the first intelligent network interface card, so that the first intelligent network interface card performs congestion control on the data based on the latencies, to obtain a congestion control result. Still in the foregoing example, because the data is continuously sent to the outside in a form of one or more packets, the TVPC controller may first provide the physical rate of the first ETP, the committed rate of the first ETP, and the maximum rate of the first ETP for the first intelligent network interface card, so that the first intelligent network interface card determines, based on the information, a rate for sending an initial packet, and sends the initial packet at the rate. As shown in FIG. 5 (FIG. 5 is a diagram of data transport according to an embodiment of this application), after the initial packet is sent from the first intelligent network interface card, the initial packet may pass through a switch, and is received by the second intelligent network interface card. The on-path switch and second intelligent network interface card may mark resource information (including a bandwidth resource, a queue resource, and the like) of the switch and the second intelligent network interface card in the initial packet. After receiving the initial packet through the second ETP, the second cloud instance adds an acknowledge character (acknowledge character, ACK) to a feedback packet. The feedback packet carries on-path congestion information (ACK _CCinfo), and the congestion information includes congestion information (DCN CC) of the switch, congestion information (NIC CC) of the second intelligent network interface card, and the like in FIG. 5. In this case, after receiving the feedback packet, the first intelligent network interface card performs congestion control based on the congestion information, that is, adjusts, based on the congestion information, a rate for sending a subsequent packet (an adjusted rate is the congestion control result). In this way, the adjusted rate can match the average latency between any two ETPs in the first TVPC and the maximum latency between any two ETPs in the first TVPC. The adjusted rate is shown in the following formula:

$$SendPacketRate=F(TVPC\_Average\_Latency, TVPC\_Max\_Latency, ACK\_CCinfo)\ (1)$$

In the foregoing formula, SendPacketRate is the adjusted rate, TVPC_Average_Latency is the average latency between any two ETPs in the first TVPC, TVPC_Max_Latency is the maximum latency between any two ETPs in the first TVPC, and ACK_CCinfo is the congestion information. It should be noted that, regardless of a quantity of subsequent packets, the first intelligent network interface card performs transport control, congestion control, rate control, and path control on each packet in the same way as for the initial packet. Details are not described subsequently.

(1.3) The TVPC controller may perform rate control on the data with reference to the first intelligent network interface card based on the minimum total rate of the plurality of ETPs in the first TVPC and the maximum total rate of the plurality of ETPs in the first TVPC, to obtain a rate control result. Still in the foregoing example, the TVPC controller may collect real-time sending rates of the plurality of ETPs in the first TVPC (that is, real-time sending rates of intelligent network interface cards bound to all the ETPs), and perform distributed rate limiting and dynamically allocate a token to each ETP in the first TVPC based on the minimum total rate of the plurality of ETPs in the first TVPC and the maximum total rate of the plurality of ETPs in the first TVPC. In this case, after receiving a token of the first ETP, the first intelligent network interface card bound to the first ETP may further adjust an adjusted rate by using the token, to obtain a re-adjusted rate (the re-adjusted rate is the rate control result), and send a subsequent packet based on the rate. The re-adjusted rate is shown in the following formula:

$$SendPacketRate`=F`(SendPacketRate,\ Total\_Rate\_Token)\ (2)$$

In the foregoing formula, Total_Rate_Token is the token of the first ETP.

(1.4) The TVPC controller may perform path control on the data with reference to the first intelligent network interface card based on the committed rate of the first ETP, the maximum rate of the first ETP, the minimum total rate of the plurality of ETPs in the first TVPC, and the maximum total rate of the plurality of ETPs in the first TVPC, to obtain a path control result. Still in the foregoing example, the TVPC controller may plan a plurality of forwarding paths between the first intelligent network interface card and the second intelligent network interface card (the forwarding paths may also be understood as a plurality of forwarding paths between the first ETP and the second ETP, and different forwarding paths may pass through different intermediate nodes, for example, switches) based on the committed rate of the first ETP, the maximum rate of the first ETP, the minimum total rate of the plurality of ETPs in the first TVPC, and the maximum total rate of the plurality of ETPs in the first TVPC, and send the forwarding paths to the first intelligent network interface card. The first intelligent network interface card may select one path from the plurality of forwarding paths according to a rule to send the data (the selected path is the path control result).

(2) When the first cloud instance is located in the first TVPC and the second cloud instance is located in the second TVPC, the TVPC controller may control, based on the configuration parameter for the first ETP and the configuration parameter for the first TVPC and the second TVPC, the first intelligent network interface card to perform network control on the data, to obtain a network control result. This process includes the following steps.

(2.1) The TVPC controller may send the reliable transport policy of the first ETP and the ordering transport policy of the first ETP to the first intelligent network interface card, so that the first intelligent network interface card performs transport control on the data according to these policies, to obtain a transport control result. For example, the reliable transport policy of the first ETP is performing unreliable transport when the data is lost (that is, retransmission is not performed when the data is lost), and the ordering transport policy of the first ETP is performing relaxed ordering transport when the data is disordered. In this case, when the data is lost or the data is disordered, the first intelligent network interface card may correspondingly perform unreliable transport or relaxed ordering transport on the data (specific values of the two policies may be considered as the transport control result).

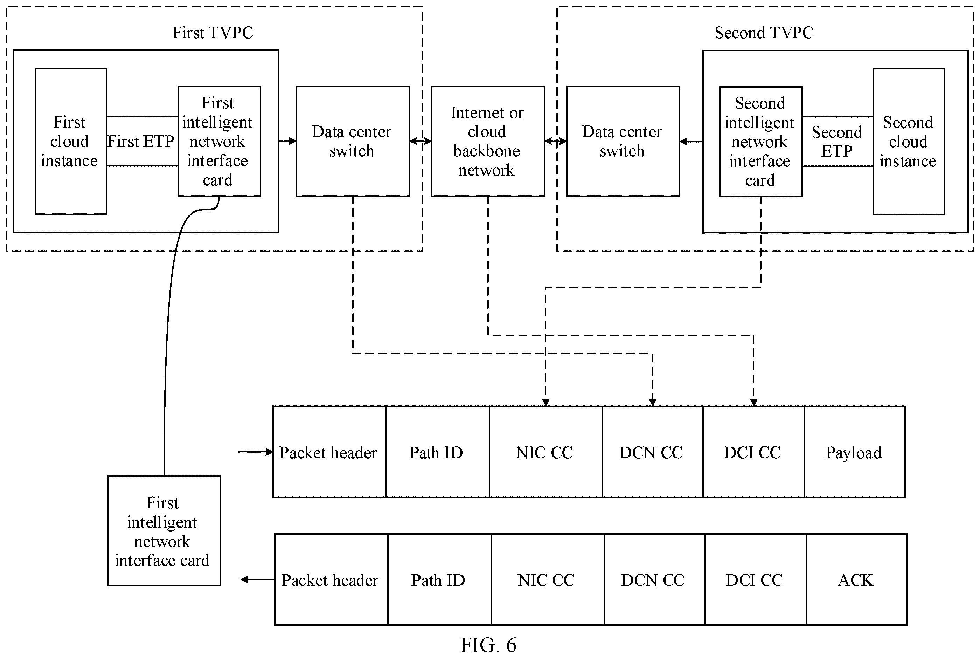

(2.2) The TVPC controller may send, to the first intelligent network interface card, the average latency between any ETP in the first TVPC and any ETP in the second TVPC and the maximum latency between any ETP in the first TVPC and any ETP in the second TVPC, so that the first intelligent network interface card performs congestion control on the data based on the latencies, to obtain a congestion control result. Still in the foregoing example, because the data is continuously sent to the outside in a form of one or more packets, the TVPC controller may first provide the physical rate of the first ETP, the committed rate of the first ETP, and the maximum rate of the first ETP for the first intelligent network interface card, so that the first intelligent network interface card determines, based on the information, a rate for sending an initial packet, and sends the initial packet at the rate. As shown in FIG. 6 (FIG. 6 is another diagram of data transport according to an embodiment of this application), after the initial packet is sent from the first intelligent network interface card, the initial packet may pass through a switch and a router (a router on the internet or a cloud backbone network), and is received by the second intelligent network interface card. The on-path switch, router, and second intelligent network interface card may mark resource information (including a bandwidth resource, a queue resource, and the like) of the switch, the router, and the second intelligent network interface card in the initial packet. After receiving the initial packet through the second ETP, the second cloud instance adds an acknowledge character (acknowledge character, ACK) to a feedback packet. The feedback packet carries on-path congestion information (ACK_CCinfo), and the congestion information includes congestion information (DCN CC) of the switch, congestion information (DCI CC) of the router, congestion information (NIC CC) of the second intelligent network interface card, and the like in FIG. 6. In this case, after receiving the feedback packet, the first intelligent network interface card performs congestion control based on the congestion information, that is, adjusts, based on the congestion information, a rate for sending a subsequent packet (an adjusted rate is the congestion control result). In this way, the adjusted rate can match the average latency between any ETP in the first TVPC and any ETP in the second TVPC and the maximum latency between any ETP in the first TVPC and any ETP in the second TVPC. The adjusted rate is shown in the following formula:

$$SendPacketRate = F(TVPC`\_Average\_Latency, TVPC`\_Max\_Latency, ACK\_CCinfo) \ (3)$$

In the foregoing formula, SendPacketRate is the adjusted rate, TVPC'_Average_Latency is the average latency between any ETP in the first TVPC and any ETP in the second TVPC, TVPC'_Max_Latency is the maximum latency between any ETP in the first TVPC and any ETP in the second TVPC, and ACK_CCinfo is the congestion information.

(2.3) The TVPC controller may perform rate control on the data with reference to the first intelligent network interface card based on the minimum total rate of the plurality of ETPs in the first TVPC and the plurality of ETPs in the second TVPC and the maximum total rate of the plurality of ETPs in the first TVPC and the plurality of ETPs in the second TVPC, to obtain a rate control result. Still in the foregoing example, the TVPC controller may collect real-time sending rates of the plurality of ETPs in the first TVPC (that is, real-time sending rates of intelligent network interface cards bound to all the ETPs), and perform distributed rate limiting and dynamically allocate a token to each ETP in the first TVPC based on the minimum total rate of the plurality of ETPs in the first TVPC and the plurality of ETPs in the second TVPC and the maximum total rate of the plurality of ETPs in the first TVPC and the plurality of ETPs in the second TVPC. In this case, after receiving a token of the first ETP, the first intelligent network interface card bound to the first ETP may further adjust an adjusted rate by using the token, to obtain a re-adjusted rate (the re-adjusted rate is the rate control result), and send a subsequent packet based on the rate. For the re-adjusted rate, refer to Formula (2).

(2.4) The TVPC controller may perform path control on the data with reference to the first intelligent network interface card based on the committed rate of the first ETP, the maximum rate of the first ETP, the minimum total rate of the plurality of ETPs in the first TVPC and the plurality of ETPs in the second TVPC, and the maximum total rate of the plurality of ETPs in the first TVPC and the plurality of ETPs in the second TVPC, to obtain a path control result. Still in the foregoing example, the TVPC controller may plan a plurality of forwarding paths between the first intelligent network interface card and the second intelligent network interface card (the forwarding paths may also be understood as a plurality of forwarding paths between the first ETP and the second ETP, and different forwarding paths may pass through different intermediate nodes, for example, switches) based on the committed rate of the first ETP, the maximum rate of the first ETP, the minimum total rate of the plurality of ETPs in the first TVPC and the plurality of ETPs in the second TVPC, and the maximum total rate of the plurality of ETPs in the first TVPC and the plurality of ETPs in the second TVPC, and send the forwarding paths to the first intelligent network interface card. The first intelligent network interface card may select one path from the plurality of forwarding paths according to a rule to send the data (the selected path is the path control result).

In embodiments of this application, when the tenant needs to configure the first ETP for the first cloud instance of the tenant, the cloud management platform may provide the configuration interface for the tenant, to obtain, through the configuration interface, the ETP configuration parameter input by the tenant. Then, the cloud management platform may create, based on the ETP configuration parameter, the first ETP bound to the first cloud instance of the tenant. When the tenant needs to enable the first cloud instance to send the data to the second cloud instance, the first cloud instance may send the data to the cloud management platform through the first ETP. Then, the cloud management platform may perform network control on the data based on the ETP configuration parameter, and send the data to the second cloud instance based on the network control result through the second ETP bound to the second cloud instance. In the foregoing process, after the cloud management platform configures the dedicated first ETP for the first cloud instance of the tenant based on the ETP configuration parameter of the tenant, a network control authority may be successfully transferred from the first cloud instance to the cloud management platform. When performing network control, the cloud management platform may comprehensively consider various statuses in an entire network. Therefore, a result obtained by the cloud management platform through network control not only can ensure that the data of the first cloud instance is successfully sent to the second cloud instance, to meet a data transport requirement of the tenant, but also can avoid the various statuses in the entire network or mitigate impact caused by these emergent statuses, to ensure network quality of another tenant.

Further, the cloud management platform provides the configuration interface for the tenant, the tenant may set a throughput of the first ETP, a throughput and a latency of the first TVPC (that is, the physical latency between the plurality of ETPs in the first TVPC, the communication latency between the plurality of ETPs in the first TVPC, and the total throughput of the plurality of ETPs in the first TVPC), a throughput and a latency of a combination including the first TVPC and the second TVPC (that is, the communication latency between the plurality of ETPs in the first TVPC and the plurality of ETPs in the second TVPC and the total throughput of the plurality of ETPs in the first TVPC and the plurality of ETPs in the second TVPC). Therefore, when transmitting the data of the tenant, the cloud management platform performs network control strictly based on the parameters of the network resources, to meet a deterministic network requirement of the tenant.

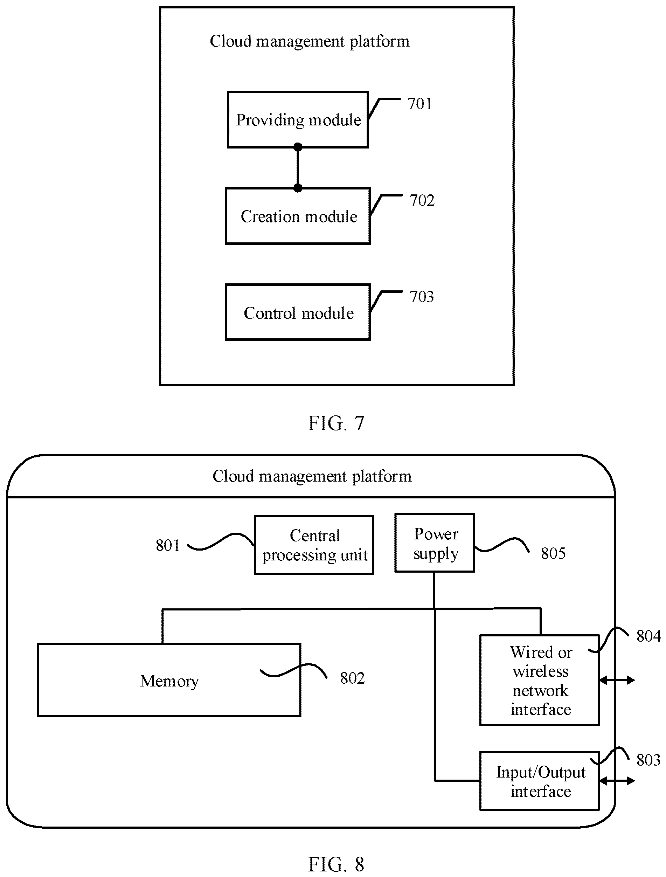

The foregoing is detailed descriptions of the network control method based on the cloud management platform provided in embodiments of this application. The following describes the cloud management platform provided in embodiments of this application. FIG. 7 is a diagram of a structure of a cloud management platform according to an embodiment of this application. As shown in FIG. 7, the cloud management platform includes:

a providing module 701, configured to provide a configuration interface, the configuration interface is configured to obtain an ETP configuration parameter input by a tenant, where for example, the providing module 701 may be configured to implement step 401 in the embodiment shown in FIG. 4;
a creation module 702, configured to create, based on the ETP configuration parameter, a first ETP bound to a first cloud instance of the tenant, where the first ETP is configured to forward data from first cloud instance to the cloud management platform; and for example, the creation module 702 may be configured to implement step 402 in the embodiment shown in FIG. 4; and
a control module 703, configured to: perform network control on the data based on the ETP configuration parameter, and send, based on a control result, the data to a second ETP bound to a second cloud instance, where the second ETP is configured to forward the data from the cloud management platform to the second cloud instance. For example, the control module 703 may be configured to implement step 403 in the embodiment shown in FIG. 4.

In embodiments of this application, when the tenant needs to configure the first ETP for the first cloud instance of the tenant, the cloud management platform may provide the configuration interface for the tenant, to obtain, through the configuration interface, the ETP configuration parameter input by the tenant. Then, the cloud management platform may create, based on the ETP configuration parameter, the first ETP bound to the first cloud instance of the tenant. When the tenant needs to enable the first cloud instance to send the data to the second cloud instance, the first cloud instance may send the data to the cloud management platform through the first ETP. Then, the cloud management platform may perform network control on the data based on the ETP configuration parameter, and send the data to the second cloud instance based on the network control result through the second ETP bound to the second cloud instance. In the foregoing process, after the cloud management platform configures the dedicated first ETP for the first cloud instance of the tenant based on the ETP configuration parameter of the tenant, a network control authority may be successfully transferred from the first cloud instance to the cloud management platform. When performing network control, the cloud management platform may comprehensively consider various statuses in an entire network. Therefore, a result obtained by the cloud management platform through network control not only can ensure that the data of the first cloud instance is successfully sent to the second cloud instance, to meet a data transport requirement of the tenant, but also can avoid the various statuses in the entire network or mitigate impact caused by these emergent statuses, to ensure network quality of another tenant.

In a possible implementation, the first cloud instance, the first ETP, the second cloud instance, and the second ETP are located in a first TVPC.

In a possible implementation, the first cloud instance and the first ETP are located in a first TVPC, and the second cloud instance and the second ETP are located in a second TVPC.

In a possible implementation, the ETP configuration parameter includes a communication latency between a plurality of ETPs in the first TVPC, a total throughput of the plurality of ETPs in the first TVPC, a throughput of the first ETP, and a data transport policy of the first ETP, and the plurality of ETPs in the first TVPC include the first ETP and the second ETP. The control module 703 is configured to perform network control on the data based on the communication latency, the total throughput, the throughput, and the data transport policy, to obtain a network control result.

In a possible implementation, the ETP configuration parameter further includes a communication latency between a plurality of ETPs in the first TVPC and a plurality of ETPs in the second TVPC, a total throughput of the plurality of ETPs in the first TVPC and the plurality of ETPs in the second TVPC, a throughput of the first ETP, and a data transport policy of the first ETP, the plurality of ETPs in the first TVPC include the first ETP, and the plurality of ETPs in the second TVPC include the second ETP. The control module 703 is configured to perform network control on the data based on the communication latency, the total throughput, the throughput, and the data transport policy, to obtain a network control result.

In a possible implementation, the ETP configuration parameter includes a physical distance between the plurality of ETPs in the first TVPC. The creation module 702 is configured to create, in the first TVPC based on the physical distance, the first ETP bound to the first cloud instance of the tenant.

In a possible implementation, the network control includes transport control, congestion control, rate control, and path control, and the network control result includes a transport control result, a congestion control result, a rate control result, and a path control result.

It should be noted that, content such as information exchange between the modules/units of the apparatuses and an implementation process is based on the same concept as the method embodiment of this application, and produces the same technical effects as those of the method embodiment of this application. For specific content, refer to the foregoing descriptions in the method embodiment of embodiments of this application. Details are not described herein again.

FIG. 8 is a diagram of another structure of a cloud management platform according to an embodiment of this application. As shown in FIG. 8, an embodiment of the cloud management platform may include one or more central processing units 801, a memory 802, an input/output interface 803, a wired or wireless network interface 804, and a power supply 805.

The memory 802 may perform transitory storage or persistent storage. Furthermore, the central processing unit 801 may be configured to communicate with the memory 802 and execute a series of instruction operations in the memory 802 on a server side.

In this embodiment, the central processing unit 801 may perform the method steps performed by the cloud management platform in the embodiment shown in FIG. 4. Details are not described herein again.

In this embodiment, specific division into the functional modules in the central processing unit 801 may be similar to division of the providing module, the creation module, and the control module described in FIG. 7. Details are not described herein again.

An embodiment of this application further relates to a computer storage medium. The computer-readable storage medium stores a program for signal processing. When the program is run on a computer, the computer is enabled to perform the steps in the embodiment shown in FIG. 4.

An embodiment of this application further relates to a computer program product. The computer program product stores instructions, and when the instructions are executed by a computer, the computer performs the steps in the embodiment shown in FIG. 4.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read only memory (read only memory, ROM), a random access memory (random access memory, RAM), a magnetic disk, or an optical disc.

**Claims**

1. A network control method based on a cloud management platform, wherein the method comprises:

   providing, by the cloud management platform, a configuration interface, wherein the configuration interface is configured to obtain an elastic transport layer ETP configuration parameter input by a tenant;
   creating, by the cloud management platform based on the ETP configuration parameter, a first ETP bound to a first cloud instance of the tenant, wherein the first ETP is configured to forward data from the first cloud instance to the cloud management platform; and

performing, by the cloud management platform, network control on the data based on the ETP configuration parameter, and sending, based on a network control result, the data to a second ETP bound to a second cloud instance, wherein the second ETP is configured to forward the data from the cloud management platform to the second cloud instance.

2. The method according to claim 1, wherein the first cloud instance, the first ETP, the second cloud instance, and the second ETP are located in a first transport-based virtual private cloud TVPC.

3. The method according to claim 1, wherein the first cloud instance and the first ETP are located in a first TVPC, and the second cloud instance and the second ETP are located in a second TVPC.

4. The method according to claim 2, wherein the ETP configuration parameter comprises a communication latency between a plurality of ETPs in the first TVPC, a total throughput of the plurality of ETPs in the first TVPC, a throughput of the first ETP, and a data transport policy of the first ETP, and the plurality of ETPs in the first TVPC comprise the first ETP and the second ETP; and

performing, by the cloud management platform, network control on the data based on the ETP configuration parameter comprises:

performing, by the cloud management platform, network control on the data based on the communication latency, the total throughput, the throughput, and the data transport policy, to obtain a network control result.

5. The method according to claim 3, wherein the ETP configuration parameter further comprises a communication latency between a plurality of ETPs in the first TVPC and a plurality of ETPs in the second TVPC, a total throughput of the plurality of ETPs in the first TVPC and the plurality of ETPs in the second TVPC, a throughput of the first ETP, and a data transport policy of the first ETP, the plurality of ETPs in the first TVPC comprise the first ETP, and the plurality of ETPs in the second TVPC comprise the second ETP; and

performing, by the cloud management platform, network control on the data based on the ETP configuration parameter comprises:

performing, by the cloud management platform, network control on the data based on the communication latency, the total throughput, the throughput, and the data transport policy, to obtain a network control result.

6. The method according to claim 4 or 5, wherein the ETP configuration parameter comprises a physical distance between the plurality of ETPs in the first TVPC; and

creating, by the cloud management platform based on the ETP configuration parameter, the first ETP bound to the first cloud instance of the tenant comprises:

creating, by the cloud management platform in the first TVPC based on the physical distance, the first ETP bound to the first cloud instance of the tenant.

7. The method according to any one of claims 1 to 6, wherein the network control comprises transport control, congestion control, rate control, and path control, and the network control result comprises a transport control result, a congestion control result, a rate control result, and a path control result.

8. A cloud management platform, wherein the cloud management platform comprises:

a providing module, configured to provide a configuration interface, wherein the configuration interface is configured to an obtain ETP configuration parameter input by a tenant;

a creation module, configured to create, based on the ETP configuration parameter, a first ETP bound to a first cloud instance of the tenant, wherein the first ETP is configured to forward data from the first cloud instance to the cloud management platform; and

a control module, configured to: perform network control on the data based on the ETP configuration parameter, and send, based on a network control result, the data to a second ETP bound to a second cloud instance, wherein the second ETP is configured to forward the data from the cloud management platform to the second cloud instance.

9. The cloud management platform according to claim 8, wherein the first cloud instance, the first ETP, the second cloud instance, and the second ETP are located in a first TVPC.

10. The cloud management platform according to claim 8, wherein the first cloud instance and the first ETP are located in a first TVPC, and the second cloud instance and the second ETP are located in a second TVPC.

11. The cloud management platform according to claim 9, wherein the ETP configuration parameter comprises a communication latency between a plurality of ETPs in the first TVPC, a total throughput of the plurality of ETPs in the first TVPC, a throughput of the first ETP, and a data transport policy of the first ETP, and the plurality of ETPs in the first TVPC comprise the first ETP and the second ETP; and
    the control module is configured to perform network control on the data based on the communication latency, the total throughput, the throughput, and the data transport policy, to obtain a network control result.

12. The cloud management platform according to claim 10, wherein the ETP configuration parameter further comprises a communication latency between a plurality of ETPs in the first TVPC and a plurality of ETPs in the second TVPC, a total throughput of the plurality of ETPs in the first TVPC and the plurality of ETPs in the second TVPC, a throughput of the first ETP, and a data transport policy of the first ETP, the plurality of ETPs in the first TVPC comprise the first ETP, and the plurality of ETPs in the second TVPC comprise the second ETP; and
    the control module is configured to perform network control on the data based on the communication latency, the total throughput, the throughput, and the data transport policy, to obtain a network control result.

13. The cloud management platform according to claim 11 or 12, wherein the ETP configuration parameter comprises a physical distance between the plurality of ETPs in the first TVPC; and
    the creation module is configured to create, in the first TVPC based on the physical distance, the first ETP bound to the first cloud instance of the tenant.

14. The cloud management platform according to any one of claims 8 to 13, wherein the network control comprises transport control, congestion control, rate control, and path control, and the network control result comprises a transport control result, a congestion control result, a rate control result, and a path control result.

15. A cloud management platform, wherein the cloud management platform comprises a memory and a processor, the memory stores code, the processor is configured to execute the code, and when the code is executed, the cloud management platform performs the method according to any one of claims 1 to 7.

16. A computer storage medium, wherein the computer storage medium stores one or more instructions, and when the instructions are executed by one or more computers, the one or more computers are enabled to perform the method according to any one of claims 1 to 7.

17. A computer program product, wherein the computer program product stores instructions, and when the instructions are executed by a computer, the computer is enabled to perform the method according to any one of claims 1 to 7.

FIG. 1

FIG. 2

Physical server

Cloud instance

Transport
layer

ETP

Network
layer

Intelligent network
interface card

FIG. 3

A cloud management platform provides a configuration interface, where the
configuration interface is configured to obtain an ETP configuration parameter
input by a tenant

401

The cloud management platform creates, based on the ETP configuration
parameter, a first ETP bound to a first cloud instance of the tenant, where the
first ETP is configured to forward data from the first cloud instance to the
cloud management platform

402

The cloud management platform performs network control on the data based
on the ETP configuration parameter, and sends, based on a network control
result, the data to a second ETP bound to a second cloud instance, where the
second ETP is configured to forward the data from the cloud management
platform to the second cloud instance

403

FIG. 4

First TVPC

Second cloud instance — Second ETP — Second intelligent network interface card

First cloud instance — First ETP — First intelligent network interface card

Data center switch

First intelligent network interface card

| Packet header | Path ID | NIC CC | DCN CC | Payload |
|---|---|---|---|---|

| Packet header | Path ID | NIC CC | DCN CC | ACK |
|---|---|---|---|---|

FIG. 5

First TVPC

Second TVPC

| First cloud instance | First ETP | First intelligent network interface card |

Data center switch

Internet or cloud backbone network

Data center switch

| Second intelligent network interface card | Second ETP | Second cloud instance |

First intelligent network interface card

| Packet header | Path ID | NIC CC | DCN CC | DCI CC | Payload |
|---|---|---|---|---|---|

| Packet header | Path ID | NIC CC | DCN CC | DCI CC | ACK |
|---|---|---|---|---|---|

FIG. 6

Cloud management platform

Providing module — 701

Creation module — 702

Control module — 703

FIG. 7

Cloud management platform

801 — Central processing unit

Power supply — 805

Memory — 802

Wired or wireless network interface — 804

Input/Output interface — 803

FIG. 8

## INTERNATIONAL SEARCH REPORT

| International application No. |
|---|
| **PCT/CN2024/076311** |

| A. | CLASSIFICATION OF SUBJECT MATTER |
|---|---|
| | H04L 41/0803(2022.01)i |

According to International Patent Classification (IPC) or to both national classification and IPC

| B. | FIELDS SEARCHED |
|---|---|

Minimum documentation searched (classification system followed by classification symbols)

IPC： H04L

Documentation searched other than minimum documentation to the extent that such documents are included in the fields searched

Electronic data base consulted during the international search (name of data base and, where practicable, search terms used)

CJFD, CNTXT, DWPI, ENTXT: 云, 管理, 平台, 传输, 弹性传输层, 传输协议, 交换机, 配置, 时延, 吞吐量, 网卡, 虚拟, 租户, cloud, management, platform, elastic, transport, switch, configuration, delay, throughput, subscriber, tenant

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115686818 A (HUAWEI CLOUD COMPUTING TECHNOLOGY CO., LTD.) 03 February 2023 (2023-02-03) description, paragraphs 90-93 | 1-17 |
| A | CN 105284080 A (HUAWEI TECHNOLOGIES CO., LTD.) 27 January 2016 (2016-01-27) entire document | 1-17 |
| A | CN 112398687 A (GUANGDONG HUANAN TECHNOLOGY TRANSFER CENTER CO., LTD.) 23 February 2021 (2021-02-23) entire document | 1-17 |
| A | WO 2022237824 A1 (HUAWEI CLOUD COMPUTING TECHNOLOGIES CO., LTD.) 17 November 2022 (2022-11-17) entire document | 1-17 |
| A | US 2023030187 A1 (SALESFORCE.COM, INC.) 02 February 2023 (2023-02-02) entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 April 2024** | **26 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076311**

| Patent document cited in search report | | | Publication date (day/month/year) | Patent family member(s) | | | Publication date (day/month/year) |
|---|---|---|---|---|---|---|---|
| CN | 115686818 | A | 03 February 2023 | None | | | |
| CN | 105284080 | A | 27 January 2016 | WO | 2015149253 | A1 | 08 October 2015 |
| CN | 112398687 | A | 23 February 2021 | None | | | |
| WO | 2022237824 | A1 | 17 November 2022 | EP | 4325816 | A1 | 21 February 2024 |
| | | | | US | 2024073111 | A1 | 29 February 2024 |
| | | | | CN | 115967712 | A | 14 April 2023 |
| US | 2023030187 | A1 | 02 February 2023 | None | | | |

Form PCT/ISA/210 (patent family annex) (July 2022)

**REFERENCES CITED IN THE DESCRIPTION**

**Patent documents cited in the description**

- CN 202310100838
- CN 202310331901